(19) Europäisches Patentamt
European Patent Office
Office européen des brevets

(11) **EP 3 907 255 B1**

(12) **EUROPEAN PATENT SPECIFICATION**

(45) Date of publication and mention
of the grant of the patent:
**20.04.2022 Bulletin 2022/16**

(21) Application number: **21168017.8**

(22) Date of filing: **13.04.2021**

(51) International Patent Classification (IPC):
*C08L 7/00* *(2006.01)*      *C08L 9/06* *(2006.01)*
*C08K 3/04* *(2006.01)*      *C08L 57/02* *(2006.01)*
*C08L 65/00* *(2006.01)*     *C08K 5/053* *(2006.01)*
*C08L 17/00* *(2006.01)*

(52) Cooperative Patent Classification (CPC):
(C-Sets available)
**C08L 7/00; C08L 9/06**                    (Cont.)

(54) **RUBBER COMPOSITION FOR TIRE TREAD, TIRE TREAD AND TIRE**

KAUTSCHUKZUSAMMENSETZUNG FÜR REIFENLAUFFLÄCHE, REIFENLAUFFLÄCHE UND REIFEN

COMPOSITION DE CAOUTCHOUC POUR BANDE DE ROULEMENT DE PNEUMATIQUE, BANDE DE ROULEMENT DE PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2020 JP 2020081951**

(43) Date of publication of application:
**10.11.2021 Bulletin 2021/45**

(73) Proprietor: **Sumitomo Rubber Industries, Ltd.
Kobe-shi, Hyogo 651-0072 (JP)**

(72) Inventor: **NAGAI, Haruka
Kobe-shi, Hyogo 651-0072 (JP)**

(74) Representative: **TBK
Bavariaring 4-6
80336 München (DE)**

(56) References cited:
**WO-A1-2019/111546      JP-A- 2009 096 919**

(52) Cooperative Patent Classification (CPC): (Cont.)

C-Sets
**C08L 7/00;**
**C08L 9/06**

**Description**

TECHNICAL FIELD

The present invention relates to a rubber composition for tire tread, a tire tread composed of the rubber composition, and a tire comprising the tire tread.

BACKGROUND OF THE INVENTION

Chipping refers to a phenomenon in which a part of a rubber forming a surface layer of a tread is peeled off into a scale shape. When a vehicle equipped with tires is running, a surface of a tread comes into contact with a road surface. The contact between the tread and the road surface produces a scratch (an initial crack) on a part of the rubber of the tread surface. Stress is concentrated on this scratch due to shear deformation received from the road surface during turning and sudden braking. Chipping occurs when the crack grows as the tip of this scratch being a starting point.

JP 2009-96919 A describes that a rubber composition for tread comprising a rubber component, 20 parts by mass or more and 80 parts by mass or less of carbon black, 10 parts by mass or more and 80 parts by mass or less of silica, 0.2 parts by mass or more and 5 parts by mass or less of a silane coupling agent, and 0.1 parts by mass or more and 5 parts by mass or less of a predetermined alkoxy group-containing compound based on 100 parts by mass of the rubber component has an excellent processability when unvulcanized and that a tire having a low rolling resistance and a high chipping resistance can be manufactured.

SUMMARY OF THE INVENTION

It is an object of the present invention to provide a rubber composition for tire tread having an improved balanced performance of abrasion resistance and chipping resistance, a tire tread composed of the rubber composition, and a tire comprising the tire tread.

As a result of intensive studies for solving the above-described problem, the present inventor has found that the above-described problem can be solved by compounding a filler comprising carbon black, an aromatic ring-containing resin, and a polyhydric alcohol in a rubber component comprising a styrene-butadiene rubber and an isoprene-based rubber to prepare a rubber composition, and conducted further studies to complete the present invention.

That is, the present invention relates to

[1] A rubber composition for tire tread, comprising:

a diene-based rubber component comprising a styrene-butadiene rubber and an isoprene-based rubber,
a filler comprising carbon black,
an aromatic ring-containing resin, and
a polyhydric alcohol,

[2] The rubber composition for tire tread of [1] above, wherein a content of the styrene-butadiene rubber in the diene-based rubber component is 10 to 50% by mass, preferably 15 to 50% by mass, more preferably 20 to 50% by mass, more preferably 25 to 45% by mass, more preferably 30 to 45% by mass, more preferably 30 to 40% by mass, more preferably 30 to 35% by mass,

[3] The rubber composition for tire tread of [1] or [2] above, wherein a styrene content in the styrene-butadiene rubber is 15% or more, preferably 15 to 50%, more preferably 15 to 40%, more preferably 15 to 30%, more preferably 15 to 25%, or preferably 18% or more, preferably 18 to 50%, more preferably 18 to 40%, more preferably 18 to 30%, more preferably 18 to 25%, or preferably 20% or more, preferably 20 to 50%, more preferably 20 to 40%, more preferably 20 to 30%, more preferably 20 to 25%, or preferably 22% or more, preferably 22 to 50%, more preferably 22 to 40%, more preferably 22 to 30%, more preferably 22 to 25%,

[4] The rubber composition for tire tread of any one of [1] to [3] above, wherein the polyhydric alcohol has 6 or more, preferably 6 to 10, more preferably 6 to 9, more preferably 6 to 8 of carbon atoms,

[5] The rubber composition for tire tread of any one of [1] to [4] above, wherein the aromatic ring-containing resin is a homopolymer or copolymer comprising an aromatic ring-containing monomer, the aromatic ring-containing monomer having at least one hydroxyl group,

[6] The rubber composition for tire tread of any one of [1] to [5] above, further comprising at least one selected from a recycled rubber and a powdered rubber,

[7] The rubber composition for tire tread of any one of [1] to [6] above, wherein the diene-based rubber component has an average glass transition temperature (Tg) of -50°C or lower, preferably -85 to -50°C, more preferably -80 to -55°C, more preferably -80 to -60°C, more preferably -75 to -60°C, more preferably -75 to -65°C,

[8] The rubber composition for tire tread of any one of [1] to [7] above, wherein the polyhydric alcohol comprises a linear polyhydric alcohol,

[9] The rubber composition for tire tread of any one of [1] to [8] above, wherein a content of the isoprene-based rubber in the diene-based rubber component is 30% by mass or more, preferably 30 to 90% by mass, more preferably 30 to 80% by mass, more preferably 30 to 60% by mass, more preferably 30 to 50% by mass, or preferably 35% by mass or more, more preferably 35 to 90% by mass, more preferably 40 to 90% by mass, more preferably 40 to 80% by mass, more preferably 40 to 60% by mass, more preferably 45 to 60% by mass, more preferably 45 to 50% by mass,

[10] The rubber composition for tire tread of any one of [1] to [9] above, wherein the polyhydric alcohol satisfies the following equation (A):

(A) $\alpha/\beta \leq 0.5$ (preferably $0.2 \leq \alpha/\beta \leq 0.5$, or preferably $\alpha/\beta \leq 0.4$, more preferably $0.2 \leq \alpha/\beta \leq 0.4$, or preferably $\alpha/\beta \leq 0.3$, more preferably $0.2 \leq \alpha/\beta \leq 0.3$),

$\alpha$: number of hydroxyl groups in one molecule of the polyhydric alcohol,
$\beta$: number of carbon atoms of the polyhydric alcohol,

[11] The rubber composition for tire tread of any one of [1] to [10] above, wherein a melting point of the polyhydric alcohol is lower than 50°C, preferably -20°C or higher and lower than 50°C, more preferably -20 to 49°C, more preferably -15 to 47°C, more preferably -15 to 45°C,

[12] The rubber composition for tire tread of any one of [1] to [11] above, wherein a content of the carbon black based on 100 parts by mass of the diene-based rubber component is 40 parts by mass or more, preferably 40 to 150 parts by mass, more preferably 41 to 100 parts by mass, more preferably 43 to 100 parts by mass, more preferably 45 to 100 parts by mass, more preferably 45 to 60 parts by mass,

[13] The rubber composition for tire tread of any one of [1] to [12] above, wherein a content of the carbon black in the filler is 80% by mass or more, preferably 85% by mass or more, more preferably 90% by mass or more, more preferably 95% by mass or more, more preferably 99% by mass or more, more preferably 100% by mass,

[14] A tire tread composed of the rubber composition for tire tread of any one of [1] to [13] above,

[15] A tire comprising the tire tread of [14] above,

[16] The tire of [15] above, wherein the tire is a heavy-duty tire,

[17] The tire of [16] above, wherein the heavy-duty tire is a heavy-duty tire for truck or bus.

According to the present invention, a rubber composition for tire tread having an improved balanced performance of abrasion resistance and chipping resistance, a tire tread composed of the rubber composition, and a tire comprising the tire tread can be provided.

BRIEF DESCRIPTION OF THE DRAWINGS

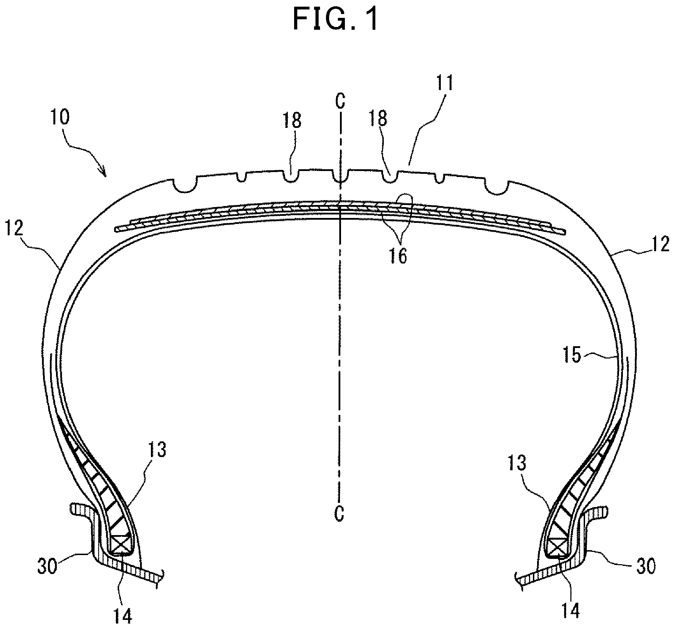

FIG. 1 is an example of a cross-sectional view of a tire.

DETAILED DESCRIPTION

One aspect of the present disclosure is a rubber composition for tire tread, comprising a diene-based rubber component comprising a styrene-butadiene rubber and an isoprene-based rubber, a filler comprising carbon black, an aromatic ring-containing resin, and a polyhydric alcohol.

Although it is not intended to be bound by theory, the following can be considered as a mechanism by which the above-described effect is exhibited. That is, since the aromatic ring-containing resin and the styrene-butadiene rubber (SBR) have similar SP values, they are compatible with each other, and the hydroxyl group (OH) on the surface of carbon black can also interact with a benzene ring of the aromatic ring-containing resin, and thus SBR-aromatic ring-containing resin-carbon black can be connected in a pseudo manner. On the other hand, the polyhydric alcohol is compatible with the isoprene-based rubber, and the hydroxyl group on the surface of carbon black interacts with the hydroxyl group of the polyhydric alcohol, and thus isoprene-based rubber-polyhydric alcohol-carbon black can also be connected in a pseudo manner. It is considered that such "pseudo-connection of the SBR-aromatic ring-containing resin-carbon black" and "pseudo-connection of the isoprene-based rubber-polyhydric alcohol-carbon black" cooperate in the entire rubber composition, resulting in improved balanced performance of abrasion resistance and chipping resistance.

A content of the styrene-butadiene rubber in the diene-based rubber component is preferably 10 to 50% by mass. When it is 10% by mass or more, it is considered that an effect of improving the chipping resistance with the SBR is easily exhibited, and the "pseudo-connection of the SBR-aromatic ring-containing resin-carbon black" increases, so that an effect of improving the balanced performance of the abrasion resistance and the chipping resistance is appropriately exhibited. Moreover, when it is 50% by mass or less, it is considered that the effect of improving the balanced performance of the abrasion resistance and the chipping resistance is appropriately exhibited. In addition, there is a tendency that heat generation can be suppressed and fuel efficiency can be secured. The content is more preferably 15% by mass or more, more preferably 20% by mass or more, more preferably 25% by mass or more, further preferably 30% by mass or more. Furthermore, the content is more preferably 45% by mass or less, more preferably 40% by mass or less, further preferably 35% by mass or less. Besides, when an oil-extended type of SBR is used as the SBR, a content of the SBR itself as a solid content comprised in the oil-extended type of SBR is defined as a content of the SBR in the diene-based rubber component.

A styrene content in the styrene-butadiene rubber is preferably 15% or more. When it is 15% or more, it is considered that the styrene content is secured, and thus an effect as the SBR is easily obtained, and the "pseudo-connection of the SBR-aromatic ring-containing resin-carbon black" increases, so that the effect of improving the balanced performance of the abrasion resistance and the chipping resistance is appropriately exhibited. The styrene content is more preferably 18% or more, more preferably 20% or more, further preferably 22% or more. Moreover, the styrene content is preferably 50% or less, more preferably 40% or less, more preferably 30% or less, further preferably 25% or less, from the viewpoints of abrasion resistance and fuel efficiency. Besides, the styrene content in the present specification is a value calculated by $^1$H-NMR measurement.

The polyhydric alcohol preferably has 6 or more carbon atoms. When it has 6 or more carbon atoms, it is considered that the compatibility between the polyhydric alcohol and the isoprene-based rubber becomes more excellent, so that the "pseudo-connection of the isoprene-based rubber-polyhydric alcohol-carbon black" easily becomes effectively exhibited, and effects of the present disclosure are well exhibited. The polyhydric alcohol may have 7 or more carbon atoms. Moreover, an upper limit of the number of carbon atoms is preferably 10 or less, more preferably 9 or less, further preferably 8 or less, from the viewpoint that the effects of the present disclosure are easy to be well exhibited.

The aromatic ring-containing resin is a homopolymer or copolymer comprising an aromatic ring-containing monomer, and the aromatic ring-containing monomer preferably has at least one hydroxyl group. When the aromatic ring-containing monomer has at least one hydroxyl group, a ratio of the hydroxyl group to which the aromatic ring-containing resin has in one molecule becomes increased. Therefore, it is considered that the hydroxyl group on the surface of carbon black and the hydroxyl group in the molecule of the aromatic ring-containing resin can interact with each other, so that the interaction between the aromatic ring-containing resin and carbon black becomes stronger, and the effect of improving the balanced performance of the abrasion resistance and the chipping resistance is appropriately exhibited. Moreover, it is considered that the hydroxyl group in the molecule of the aromatic ring-containing resin and the hydroxyl group of the polyhydric alcohol interact with each other, so that an effect that the "pseudo-connection of the SBR-aromatic ring-containing resin-carbon black" and the "pseudo-connection of the isoprene-based rubber-polyhydric alcohol-carbon black" cooperate in the entire rubber composition is effectively exhibited. Besides, the number of hydroxyl groups the aromatic ring-containing monomer has is preferably one since the effects of the present disclosure are sufficiently exhibited, but it may be two, three, or four.

It is preferable that the rubber composition for tire tread further comprises at least one selected from a recycled rubber and a powdered rubber. Generally, a rubber composition comprising a recycled rubber or powdered rubber has a problem that elongation at break or the like tends to deteriorate. However, the rubber composition of the present disclosure comprises a diene-based rubber component comprising a styrene-butadiene rubber and an isoprene-based rubber, a filler comprising carbon black, an aromatic ring-containing resin, and a polyhydric alcohol, and thus it is considered that, even when a recycled rubber or powdered rubber is compounded, the balanced performance of the abrasion resistance and the chipping resistance is improved by the above-described mechanism. As at least one selected from the recycled rubber and the powdered rubber, the recycled rubber may be used alone, the powdered rubber may be used alone, or the recycled rubber and the powdered rubber may be used in combination, but preferably the recycled rubber may be used alone.

The diene-based rubber component preferably has an average glass transition temperature (Tg) of -50°C or lower. When the temperature is -50°C or lower, it is considered that an Tg of the entire rubber composition can be lowered, and the abrasion resistance is improved, so that the effect of improving the balanced performance of the abrasion resistance and the chipping resistance is appropriately exhibited. The average Tg is more preferably -55°C or lower, more preferably -60°C or lower, further preferably -65°C or lower. Moreover, the average Tg is preferably -85°C or higher, more preferably -80°C or higher, further preferably -75°C or higher. Here, the average glass transition temperature (Tg) of the diene-based rubber component in the present specification can be calculated by $\Sigma$ (Tg of each diene-based rubber component $\times$ mass fraction of each diene-based rubber component in all diene-based rubber components). Besides, the Tg in the present specification is a value measured under a condition of a temperature rising rate of 10°C/min using a differential scanning calorimeter (Q200) manufactured by TA Instruments Japan Inc., in accordance with JIS K 7121.

The polyhydric alcohol preferably comprises a linear polyhydric alcohol. When it comprises a linear polyhydric alcohol, it is considered that the compatibility between the polyhydric alcohol and the isoprene-based rubber becomes more excellent, so that the "pseudo-connection of the isoprene-based rubber-polyhydric alcohol-carbon black" easily becomes effectively exhibited, and the effects of the present disclosure are well exhibited. The polyhydric alcohol can include a branched polyhydric alcohol and a cyclic polyhydric alcohol, in addition to the linear polyhydric alcohol. However, it is more preferable that the linear polyhydric alcohol alone is used from the viewpoint that the effects of the present disclosure are easy to be well exhibited.

A content of the isoprene-based rubber in the diene-based rubber component is preferably 30% by mass or more. When it is 30% by mass or more, it is considered that the "pseudo-connection of the isoprene-based rubber-multivalent alcohol-carbon black" increases, so that the effect of improving the balanced performance of the abrasion resistance and the chipping resistance is appropriately exhibited. The content is more preferably 35% by mass or more, more preferably 40% by mass or more, further preferably 45% by mass or more. Moreover, the content is preferably 90% by mass or less, more preferably 80% by mass or less, more preferably 60% by mass or less, further preferably 50% by mass or less.

The polyhydric alcohol preferably satisfies the following equation (A). When it satisfies the following equation (A), it is considered that both the "pseudo-connection of the SBR-aromatic ring-containing resin-carbon black" and the "pseudo-connection of the isoprene-based rubber-polyhydric alcohol-carbon black" become easy to be effectively exhibited, and the effects of the present disclosure are well exhibited. The value of $\alpha/\beta$ is preferably 0.4 or less, more preferably 0.3 or less. Moreover, a lower limit of the $\alpha/\beta$ value is preferably 0.2 or more.

$$(A) \ \alpha/\beta \leq 0.5$$

$\alpha$: number of hydroxyl groups in one molecule of the polyhydric alcohol,
$\beta$: number of carbon atoms of the polyhydric alcohol

A melting point of the polyhydric alcohol is preferably lower than 50°C. When it is lower than 50°C, it is considered that the polyhydric alcohol is easy to be uniformly dispersed in the diene-based rubber component, so that the "pseudo-connection of the isoprene-based rubber-polyhydric alcohol-carbon black" becomes easy to be effectively exhibited, and the effects of the present disclosure are well exhibited. The melting point is more preferably 49°C or lower, more preferably 47°C or lower, further preferably 45°C or lower. Moreover, a lower limit of the melting point is not particularly limited, but may be, for example, -20°C or higher, or -15°C or higher.

A content of carbon black based on 100 parts by mass of the diene-based rubber component is preferably 40 parts by mass or more. When it is 40 parts by mass or more, it is considered that the "pseudo-connection of the SBR-aromatic ring-containing resin-carbon black" and the "pseudo-connection of the isoprene-based rubber-polyhydric alcohol-carbon black" increase, and the effects of the present disclosure are well exhibited. The content is more preferably 41 parts by mass or more, more preferably 43 parts by mass or more, further preferably 45 parts by mass or more. Moreover, the content is preferably 150 parts by mass or less, more preferably 100 parts by mass or less, further preferably 60 parts by mass or less, from the viewpoints that a good dispersibility in a rubber can be obtained and that the effects of the present disclosure are easy to be well exhibited.

A content of carbon black in the filler is preferably 80% by mass or more. When it is 80% by mass or more, it is considered that both the "pseudo-connection of the SBR-aromatic ring-containing resin-carbon black" and the "pseudo-connection of the isoprene-based rubber-polyhydric alcohol-carbon black" become easy to be effectively exhibited, and the effects of the present disclosure are well exhibited.

Another aspect of the present disclosure is a tire tread composed of the rubber composition for tire tread.

Another aspect of the present disclosure is a tire comprising the tire tread.

The tire is preferably a heavy-duty tire. When it is a heavy-duty tire, it is considered that the effects of the present disclosure are well exhibited.

The heavy-duty tire is preferably a heavy-duty tire for truck or bus. When it is for a truck or bus, it is considered that the effects of the present disclosure are particularly well exhibited.

Besides, in the present specification, a numerical range identified with "to" means to include the numerical values of both ends, unless otherwise specified.

<Diene-based rubber component>

The diene-based rubber component of the present disclosure comprises a styrene-butadiene rubber and an isoprene-based rubber.

As diene-based rubber components other than the styrene-butadiene rubber and the isoprene-based rubber (other diene-based rubber components), any of those conventionally used in the rubber industry can be appropriately used, such as, for example, a butadiene rubber (BR), a styrene-isoprene rubber (SIR), a styrene-isoprene-butadiene rubber (SIBR), a chloroprene rubber (CR), and an acrylonitrile-butadiene rubber (NBR). Other diene-based rubber components can be used alone or two or more thereof can be used in combination. Among them, a BR is preferable because the effects of the present disclosure can be better exhibited. That is, the diene-based rubber component more preferably comprises a SBR, an isoprene-based rubber, and a BR, or may comprise a SBR, an isoprene-based rubber, and a BR only. Alternatively, the diene-based rubber component may comprise a SBR and an isoprene-based rubber only. Moreover, the rubber component can be categorized into a diene-based rubber component and a non-diene-based rubber component, but the rubber component of the present disclosure is preferably composed of a diene-based rubber component.

(Styrene-butadiene rubber)

Examples of the styrene-butadiene rubber (SBR) include, but not particularly limited to, for example, unmodified emulsion-polymerized styrene-butadiene rubber (E-SBR) and unmodified solution-polymerized styrene-butadiene rubber (S-SBR), and modified SBRs thereof such as a modified emulsion-polymerized styrene-butadiene rubber (modified E-SBR) and a modified solution-polymerized styrene-butadiene rubber (modified S-SBR). Examples of the modified SBR include a SBR modified at its terminal and/or main chain, a modified SBR coupled with tin, a silicon compound (a modified SBR of condensate or having a branched structure, etc.), and the like. Moreover, examples of the SBR include an oil-extended type of SBR in which its flexibility is adjusted by adding an extending oil and a non-oil-extended type of SBR in which no extending oil is added, both of which can be used. As the SBR, those manufactured and sold by, for example, JSR Corporation, Asahi Kasei Corporation, Zeon Corporation, ZS Elastomers Co., Ltd., and the like can be used. Among them, the SBR is preferably at least one of an E-SBR, a S-SBR and a modified S-SBR, more preferably at least one of an E-SBR and a modified S-SBR, and may be an E-SBR only or a modified S-SBR only, from the viewpoint of improving the balanced performance of abrasion resistance and chipping resistance. Among modified S-SBRs, a tin coupling S-SBR can be appropriately used because it can enhance the interaction with carbon black to improve the physical properties of the rubber. The SBR can be used alone or two or more thereof can be used in combination.

A vinyl content (1,2-bond butadiene unit amount) of the SBR is not particularly limited, but is preferably 10.0 to 80.0%. The vinyl content is more preferably 13.0% or more, more preferably 20.0% or more, further preferably 40.0% or more, from the viewpoints of rubber strength and grip performance. On the other hand, the vinyl content is more preferably 70.0% or less, more preferably 60.0% or less, more preferably 40.0% or less, further preferably 20.0% or less, from the viewpoints of abrasion resistance and fuel efficiency. Besides, the vinyl content in the present specification is a value measured by infrared absorption spectrometry.

A glass transition temperature (Tg) of the SBR is preferably -90°C or higher, more preferably -80°C or higher, further preferably -70°C or higher. Moreover, the Tg is preferably -10°C or lower, more preferably -30°C or lower, further preferably -45°C or lower, from the viewpoint of abrasion resistance. When the Tg of the SBR is within the above-described ranges, the effects of the present disclosure tend to be obtained more appropriately.

(Isoprene-based rubber)

Examples of the isoprene-based rubber include, for example, a natural rubber (NR), a purified NR, a modified NR, an isoprene rubber (IR), a modified IR, and the like. As the NR, those common in the tire industry such as, for example, SIR20, RSS#3, and TSR20 can be used. Examples of the purified NR include a deproteinized natural rubber (DPNR), a high-purity natural rubber, and the like, and examples of the modified NR include an epoxidized natural rubber (ENR), a hydrogenated natural rubber (HNR), a grafted natural rubber, and the like. The IR is not particularly limited, and those common in the tire industry can be used. Examples of the modified IR include an epoxidized isoprene rubber, a hydrogenated isoprene rubber, a grafted isoprene rubber, and the like. Among them, the isoprene-based rubber preferably includes at least one selected from a NR, a purified NR, and a modified NR, and more preferably includes a NR, and further preferably includes a NR only, because the effects of the present disclosure can be better exhibited. The isoprene-based rubber can be used alone or two or more thereof can be used in combination.

A glass transition temperature (Tg) of the isoprene-based rubber is not particularly limited as long as the effects of the present disclosure are not compromised, but is usually about -80 to -60°C or about -75 to -65°C.

(Butadiene rubber)

The butadiene rubber (BR) is not particularly limited, and any of those commonly used in this field can be appropriately used. Various BRs can be used, such as, for example, a low cis polybutadiene rubber (a low cis BR), a high cis polybutadiene rubber (a high cis BR), a rare earth-based butadiene rubber synthesized using a rare earth element-based catalyst (a rare earth-based BR), a butadiene rubber containing a 1,2-syndiotactic polybutadiene crystal (a SPB-containing BR), and a modified butadiene rubber (a modified BR). Among them, a high cis BR is preferable. As the BR, those manufactured and sold by, for example, Ube Industries, Ltd., Zeon Corporation, JSR Corporation, LANXESS, and the like can be used. The BR can be used alone or two or more thereof can be used in combination.

The high cis BR is a butadiene rubber having a cis content (a cis-1,4 bond content) of 90% or more. Among them, those having a cis-1,4 bond content of 95% or more are preferable, those having a cis-1,4 bond content of 96% or more are more preferable, and those having a cis-1,4 bond content of 97% or more are further preferable. When the high cis BR is compounded, low heat generation, tensile strength, elongation at break, and abrasion resistance can be improved, and the effects of the present disclosure tend to be able to be better exhibited. Besides, the cis content in the present specification is a value measured by infrared absorption spectrometry.

As the rare earth-based BR, those synthesized using a rare earth element-based catalyst and having a vinyl content (a 1,2-bond butadiene unit amount) of preferably 1.8% or less, more preferably 1.0% or less, further preferably 0.8% or less, and a cis content (a cis-1,4 bond content) of preferably 90% or more, more preferably 95% or more, more preferably 96% or more, further preferably 97% or more can be appropriately used. The above-described ranges of the vinyl content and the cis content can contribute to obtain a rubber composition having excellent elongation at break and abrasion resistance.

As the rare earth element-based catalyst used for synthesis of the rare earth-based BR, a known one can be used, such as, for example, a catalyst comprising a lanthanum series rare earth element compound, an organic aluminum compound, aluminoxane, a halogen-containing compound, and a Lewis base if necessary.

Examples of the SPB-containing BR include those in which a 1,2-syndiotactic polybutadiene crystal is chemically bonded with the BR and dispersed, but not those in which the crystal is simply dispersed in the BR. A complex elastic modulus tends to be improved because the crystal is chemically bonded to a rubber component and dispersed.

Examples of the modified BR include a modified BR modified at its terminal and/or main chain, a modified BR coupled with tin, a silicon compound, or the like (condensates, those having a branched structure, etc.), a modified BR modified at its terminal and/or main chain with a functional group interacting with silica, in particular a modified BR having at least one selected from the group consisting of a silyl group, an amino group, an amide group, a hydroxyl group, and an epoxy group, and the like. When the modified BR is used, effects of stronger interaction with a filler and an excellent fuel efficiency can be obtained.

A glass transition temperature (Tg) of the BR is preferably -150°C or higher, more preferably -130°C or higher, further preferably -120°C or higher. Moreover, the Tg is preferably -70°C or lower, more preferably -80°C or lower, more preferably -90°C or lower, further preferably -100°C or lower, from the viewpoint of abrasion resistance. When the Tg of the BR is within the above-described ranges, the effects of the present disclosure tend to be well exhibited.

A content of the BR when compounded in the diene-based rubber component is preferably 5% by mass or more, more preferably 10% by mass or more, further preferably 15% by mass or more, from the viewpoint of abrasion resistance. Moreover, the content is preferably 60% by mass or less, more preferably 40% by mass or less, more preferably 30% by mass or less, further preferably 20% by mass or less. When the content of the BR is within the above-described ranges, there is a tendency that the effects of the present disclosure are easy to be well exhibited.

<Other rubber components>

The rubber composition may further comprise non-diene-based rubber components (other rubber components). Such other rubber components are not particularly limited, and examples thereof include, for example, a butyl rubber (IIR), a hydrogenated nitrile rubber (HNBR), an ethylene propylene rubber, a silicone rubber, a chlorinated polyethylene rubber, a fluororubber (FKM), an acrylic rubber (ACM), a hydrin rubber, and the like. Other rubber components can be used alone or two or more thereof can be used in combination.

<Filler>

The filler of the present disclosure comprises carbon black. Among them, the filler of the present disclosure is preferably a filler composed of carbon black because the effects of the present disclosure can be well exhibited.

(Carbon black)

Carbon black is not particularly limited, those common in the rubber industry can be used, such as GPF, FEF, HAF, ISAF, and SAF. As carbon black, those manufactured and sold by, for example, Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and the like can be used. Carbon black can be used alone or two or more thereof can be used in combination.

A nitrogen adsorption specific surface area ($N_2SA$) of carbon black is not particularly limited, but is preferably 50 $m^2/g$ or more, preferably 70 $m^2/g$ or more, more preferably 90 $m^2/g$ or more, further preferably 111 $m^2/g$ or more, from the viewpoints that sufficient reinforcing properties can be obtained and the effects of the present disclosure are easy to be well exhibited. Moreover, the $N_2SA$ is preferably 500 $m^2/g$ or less, more preferably 450 $m^2/g$ or less, more preferably 300 $m^2/g$ or less, more preferably 250 $m^2/g$ or less, more preferably 200 $m^2/g$ or less, more preferably 180 $m^2/g$ or less is more preferable, further preferably 160 $m^2/g$ or less, from the viewpoints of an excellent dispersibility and a less heat generation. When the $N_2SA$ of carbon black is within the above-described ranges, the effects of the present disclosure tend to be able to be better exhibited. Besides, the $N_2SA$ of carbon black in the present specification is a value measured in accordance with JIS K 6217-2: 2001.

A dibutyl phthalate (DBP) oil absorption amount of carbon black is not particularly limited, but is preferably 50 ml/100 g or more, more preferably 70 ml/100 g or more, more preferably 90 ml/100 g or more, further preferably 111 ml/100 g or more, from the viewpoints that sufficient reinforcing properties can be obtained and the effects of the present disclosure are easy to be well exhibited. Moreover, the DBP oil absorption amount is preferably 220 ml/100 g or less, more preferably 180 ml/100 g or less, further preferably 130 ml/100 g or less, from the viewpoint of fuel efficiency. When the DBP oil absorption amount of carbon black is within the above-described ranges, the effects of the present disclosure tend to be able to be better exhibited. Besides, the DBP oil absorption amount of carbon black in the present specification is a value measured in accordance with JIS K 6217-4: 2008.

A content of carbon black in the filler is preferably 80% by mass or more, more preferably 85% by mass or more, more preferably 90% by mass or more, more preferably 95% by mass or more, more preferably 99% by mass or more, particularly preferably 100% by mass.

(Other fillers)

As the filler, fillers other than carbon black may be further used. Such filler is not particularly limited, and any filler commonly used in this field can be used, such as, for example, silica, aluminum hydroxide, alumina (aluminum oxide), calcium carbonate, talc, and clay. These fillers can be used alone or two or more thereof can be used in combination. When fillers other than carbon black are used as the filler, silica is preferable from the viewpoints of fuel efficiency, wet grip performance, and reinforcing effect.

Examples of silica include, but not particularly limited to, for example, silica prepared by a dry process (anhydrous silicic acid), silica prepared by a wet process (hydrous silicic acid), and the like. Among them, silica prepared by a wet process is preferable because it has many silanol groups on the surface and many reaction points with a silane coupling agent. As silica, those manufactured and sold by, for example, Evonik Degussa, Solvay, Tosoh Silica Corporation, Tokuyama Corporation, and the like can be used. Silica can be used alone or two or more thereof can be used in combination.

A $N_2SA$ of silica is not particularly limited, but is preferably 80 $m^2/g$ or more, more preferably 110 $m^2/g$ or more, more preferably 140 $m^2/g$ or more, further preferably 170 $m^2/g$ or more, from the viewpoint of securing fuel efficiency and sufficient reinforcing properties. Moreover, the $N_2SA$ is preferably 500 $m^2/g$ or less, more preferably 400 $m^2/g$ or less, more preferably 300 $m^2/g$ or less, further preferably 200 $m^2/g$ or less, from the viewpoints of silica dispersibility and processability. Besides, the $N_2SA$ of silica in the present specification is a value measured by the BET method in accordance with ASTM D3037-81.

A content of silica based on 100 parts by mass of the diene-based rubber component is preferably 5 parts by mass or more, more preferably 7 parts by mass or more, further preferably 10 parts by mass or more. Moreover, the content is preferably 150 parts by mass or less, more preferably 100 parts by mass or less, further preferably 60 parts by mass or less. When the content of silica is within the above-described ranges, sufficient reinforcing properties and good dispersion to a rubber can be obtained, and the effects of the present disclosure tend to be able to be better exhibited.

<Silane coupling agent>

When silica is compounded, it is preferably used in combination with a silane coupling agent. The silane coupling agent is not particularly limited, and any silane coupling agent conventionally used in combination with silica in the rubber industry can be used. Examples of such silane coupling agent include, for example, a silane coupling agent having a sulfide group (sulfide-based) such as bis(3-triethoxysilylpropyl)disulfide and bis(3-triethoxysilylpropyl)tetrasulfide; a silane coupling agent having a mercapto group (mercapto-based) such as 3-mercaptopropyltrimethoxysilane, 3-mercaptopropyltriethoxysilane, 2-mercaptoethyltrimethoxysilane, and 2-mercaptoethyltriethoxysilane; a silane coupling agent having a thioester group such as 3-octanoylthio-1-propyltriethoxysilane, 3-hexanoylthio-1-propyltriethoxysilane, and 3-octanoylthio-1-propyltrimethoxysilane; a silane coupling agent having a vinyl group such as vinyltriethoxysilane and vinyltrimethoxysilane; a silane coupling agent having an amino group such as 3-aminopropyltriethoxysilane, 3-aminopropyltrimethoxysilane, and 3-(2-aminoethyl)aminopropyltriethoxysilane; a glycydoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane, and the like. Among them, sulfide-based and mercapto-based silane coupling agents are preferable because they have a strong bonding strength with silica and are excellent in fuel efficiency. Moreover, it is also preferable to use a mercapto-based silane coupling agent from the viewpoint that fuel efficiency and abrasion resistance can be appropriately improved. As such silane coupling agent, those manufactured and sold by, for example, Momentive Performance Materials, Evonik Degussa, and the like can be used. These silane coupling agents can be used alone or two or more thereof can be used in combination.

A content of the silane coupling agent based on 100 parts by mass of silica is preferably 1.0 part by mass or more, more preferably 2.0 parts by mass or more, more preferably 4.0 parts by mass or more, further preferably 6.0 parts by mass or more, because a sufficient silica dispersion effect can be obtained. Moreover, the content is preferably 20.0 parts by mass or less, more preferably 18.0 parts by mass or less, further preferably 15.0 parts by mass or less, because sufficient coupling effect and silica dispersion effect are efficiently obtained to secure reinforcing properties.

<Aromatic ring-containing resin>

In the present disclosure, the "aromatic ring-containing resin" means a resin containing an aromatic ring in its structure. Specifically, the aromatic ring-containing resin is a homopolymer or copolymer comprising an aromatic ring-containing monomer and is preferably an aromatic ring-containing resin in which the aromatic ring-containing monomer has at least one hydroxyl group. The aromatic ring-containing resin is not particularly limited as long as it is a resin used in this field and comprising an aromatic ring. Examples of such resin include, for example, a C9-based petroleum resin, a C5-C9-based petroleum resin, an alkylphenol resin, a coumarone-based resin, an aromatic-modified terpene resin, a terpene-phenol resin, and the like. Among them, it is preferable to comprise at least one of a C9-based petroleum resin and a terpene-phenol resin because of a more excellent compatibility with SBR, and it is preferable that the aromatic ring-containing resin is at least one of a C9-based petroleum resin and a terpene-phenol resin. The aromatic ring-containing resin may be a C9-based petroleum resin only or a terpene-phenol resin only. Moreover, as the resin in which the aromatic ring-containing monomer has at least one hydroxyl group, at least one of an alkylphenol resin and a terpene-phenol resin is preferable, and a terpene-phenol resin is more preferable. The aromatic ring-containing resin can be used alone or two or more thereof can be used in combination.

(C9-based petroleum resin)

Examples of the C9-based petroleum resin include a resin obtained by cationically polymerizing a monomer such as styrene, vinyltoluene, alkylstyrene, and indene, which is a petroleum fraction corresponding to 8-10 carbon atoms (C9 fraction). As the C9-based petroleum resin, those manufactured and sold by, for example, JXTG Nippon Oil & Energy Corporation, and the like can be used. Moreover, specific examples of the C9-based petroleum resin include a styrene-based resin. The styrene-based resin is not particularly limited, but an α-methylstyrene-based resin (AMS) is appropriately used. Examples of the α-methylstyrene-based resin include a homopolymer of α-methylstyrene (poly-α-methylstyrene) and a copolymer of α-methylstyrene with another compound including an aromatic compound and a phenol-based compound. Examples of another compound that may constitute this copolymer include styrene, methylstyrene, methoxystyrene, divinylbenzene, and the like. As the α-methylstyrene resin, those manufactured by Arizona Chemical Company, and the like are appropriately used.

(C5-C9-based petroleum resin)

The C5-C9-based petroleum resin is a resin obtained by copolymerizing a C5 fraction and a C9 fraction, and is also referred to as an aliphatic/aromatic copolymerization-based petroleum resin. Moreover, a resin hydrogenated with the above-described petroleum resin may be used. Examples of the C5 fraction include, for example, those obtained by thermal decomposition of naphtha, and examples of a component contained in the C5 fraction include, for example, an olefin-based hydrocarbon such as 1-pentene, 2-pentene, 2-methyl-1-butene, 2-methyl-2-butene, and 3-methyl-1-butene, a diolefin-based hydrocarbon such as 2-methyl-1,3-butadiene (isoprene), 1,2-pentadiene, 1,3-pentadiene (piperylene), and 3-methyl-1,2-butadiene, and the like. The C9 fraction is the same as the C9 fraction for the C9-based petroleum resin described above. Examples of the C5-C9-based petroleum resin include, for example, a copolymer comprising indene, styrene, vinyltoluene, isoprene, and piperylene as main components, a copolymer comprising indene, styrene, vinyltoluene, and piperylene as main components, and the like. As the C5-C9-based petroleum resin, those manufactured and sold by, for example, Zibo Luhua Hongjin New Material Co., Ltd., Shandong Qilong Chemical Co., Ltd., Tosoh Corporation, and the like can be used.

(Alkylphenol resin)

Examples of the alkylphenol resin include an alkylphenol aldehyde condensed resin obtained by reacting alkylphenol with aldehydes such as formaldehyde, acetaldehyde, and furfural using an acid or an alkali catalyst; an alkylphenol alkyne condensed resin obtained by reacting alkylphenol with alkyne such as acetylene; a modified alkylphenol resin in which these resins are modified with a compound such as a cashew nut oil, a tall oil, a flaxseed oil, various animal and vegetable oils, an unsaturated fatty acid, rosin, an alkylbenzene resin, aniline, and melamine, and the like. Examples of the alkylphenol constituting the alkylphenol resin include cresol, xylenol, tert-butylphenol, octylphenol, nonylphenol, and the like. As the alkylphenol resin, those manufactured and sold by, for example, Taoka Chemical Co., Ltd., and the like can be used.

(Coumarone-based resin)

The coumarone-based resin is a resin comprising coumarone as a main component, and examples thereof include, for example, a coumarone resin, a coumarone indene resin, a copolymer resin comprising coumarone, indene, and styrene as main components, and the like. As the coumarone-based resin, those manufactured and sold by, for example, Nitto Chemical Industry Co., Ltd., and the like can be used.

(Aromatic-modified terpene resin)

The aromatic-modified terpene resin is a resin obtained by copolymerizing a terpene compound and an aromatic compound, as a monomer. The terpene compound is a polymer of isoprene ($C_5H_8$), and is a compound having terpene as a basic skeleton and being classified into monoterpene ($C_{10}H_{16}$), sesquiterpene ($C_{15}H_{24}$), diterpene (C2oH32), and the like. More specifically, examples of the terpene compound include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineol, 1,4-cineol, $\alpha$-terpineol, $\beta$-terpineol, $\gamma$-terpineol, camphene, tricyclene, sabinene, paramentadiens, carenes, and the like. Examples of the aromatic compound include, for example, styrene, $\alpha$-methylstyrene, vinyltoluene, divinyltoluene, and the like. As the aromatic-modified terpene resin, those manufactured and sold by, for example, Yasuhara Chemical Co., Ltd., and the like can be used.

(Terpene-phenol resin)

The terpene-phenol resin is a resin obtained by copolymerizing a terpene compound as a monomer and a phenol-based compound. The terpene-phenol resin may or may not be hydrogenated. The terpene compound is the same as the terpene compound for the aromatic-modified terpene resin described above. Examples of the phenol-based compound include, for example, phenol, bisphenol A, cresol, xylenol, and the like, and phenol is preferable. As the terpene-phenol resin, those manufactured and sold by, for example, Yasuhara Chemical Co., Ltd., and the like can be used.

(Mw of aromatic ring-containing resin)

A weight-average molecular weight (Mw) of the aromatic ring-containing resin is preferably 300 or more, more preferably 400 or more, further preferably 500 or more, from the viewpoints of being less likely to volatilize and exhibiting a good grip performance. Moreover, the Mw is preferably 10,000 or less, more preferably 2,500 or less, more preferably 1,500 or less, further preferably 1,200 or less. Besides, the weight-average molecular weight (Mw) in the present specification can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

(Softening point of aromatic ring-containing resin)

A softening point of the aromatic ring-containing resin is preferably 160°C or lower, more preferably 145°C or lower, further preferably 130°C or lower. Moreover, the softening point is preferably 20°C or higher, more preferably 35°C or higher, further preferably 50°C or higher. When the softening point of the aromatic ring-containing resin is within the above-described ranges, the effects of the present disclosure tend to be able to be better exhibited. Besides, the softening point in the present specification is a temperature at which a sphere drops when the softening point specified in JIS K 6220-1: 2001 is measured with a ring and ball softening point measuring device.

(SP value of aromatic ring-containing resin)

A SP value of the aromatic ring-containing resin is preferably 8.00 or more, more preferably 8.50 or more, further preferably 8.80 or more. Moreover, the SP value is preferably 11.00 or less, more preferably 10.00 or less, further preferably 9.50 or less. When the SP value of the aromatic ring-containing resin is within the above-described ranges, the compatibility with the SBR is improved, and the "pseudo-connection of the SBR-aromatic ring-containing resin-carbon black" becomes easy to be effectively exhibited, so that the effects of the present disclosure tend to be better exhibited. Besides, the SP value of the aromatic ring-containing resin in the present specification means a solubility parameter calculated by the Hoy method based on a structure of a compound, and the smaller the difference between SP values of two components is, the better the compatibility becomes. The Hoy method is a calculation method described in, for example, K.L. Hoy "Table of Solubility Parameters", Solvent and Coatings Materials Research and Development Department, Union Carbites Corp. (1985).

(Content of aromatic ring-containing resin)

A content of the aromatic ring-containing resin based on 100 parts by mass of the diene-based rubber component is preferably 0.5 parts by mass or more, more preferably 1.0 part by mass or more, more preferably 1.5 parts by mass or more, further preferably 2.0 parts by mass or more, because the "pseudo-connection of the SBR-aromatic ring-containing resin-carbon black" is easy to be effectively exhibited. Moreover, the content is preferably 30.0 parts by mass or less, more preferably 20.0 parts by mass or less, more preferably 10.0 parts by mass or less, further preferably 5.0 parts by mass or less. When the content of the aromatic ring-containing resin is within the above-described ranges, the effects of the present disclosure tend to be better exhibited.

<Polyhydric alcohol>

The polyhydric alcohol is not particularly limited, and for example, a linear polyhydric alcohol, a branched polyhydric alcohol, a cyclic polyhydric alcohol, and the like can be used. Examples of the linear polyhydric alcohol include, for example, glycols, sugar alcohols., and the like. Examples of the glycols include, for example, ethylene glycol, diethylene glycol, triethylene glycol, propylene glycol, 1,3-propanediol, dipropylene glycol, isoprene glycol, 1,3-butylene glycol, 1,2-butanediol, 1,2-pentandiol, 1,2-hexanediol, 1,2-octanediol, 1,2-decanediol, 1,4-butanediol, 1,5-pentanediol, 1,6-hexanediol, 1,7-heptanediol, 1,8-octanediol, 1,9-nonanediol, 1,10-decanediol, and the like. Examples of the sugar alcohols include, for example, tetriols such as erythritol and threitol; pentitols such as arabitol, xylitol, and ribitol; hexitols such as sorbitol, mannitol, and galactitol; heptitols such as volemitol; octitols such as D-erythro-D-galactooctitol; nonitols; decitols, and the like. A steric configuration of these sugar alcohols is not limited, and may be a D body or an L body, and may be a D-L body having a D body and an L body in an arbitrary ratio. Examples of the branched polyhydric alcohol include, for example, 2-methyl-1,3-propanediol, 3-methyl-1,5-pentanediol, neopentyl glycol, 2-ethyl-1,6-hexanediol, 2,2-diethyl-1,3-propanediol, 2-butyl-2-ethyl-1,3-propanediol, 2-methyl-1,8-octanediol, 2,2,4-trimethyl-1,3-pentanediol, 2-ethyl-1,3-hexanediol, and the like. Examples of the cyclic polyhydric alcohol include, for example, glucose, xylose, fructose, maltose, quebrachitol, and the like.

Among them, the polyhydric alcohol comprises preferably at least one of a linear polyhydric alcohol and a cyclic polyhydric alcohol, more preferably a linear polyhydric alcohol, more preferably a linear polyhydric alcohol only.

Of the linear polyhydric alcohols, it is preferable that the polyhydric alcohol comprises at least one of glycols and sugar alcohols, and it is more preferable that the polyhydric alcohol is at least one of glycols and sugar alcohols. The polyhydric alcohol may include glycols only, and may be sugar alcohols only. The polyhydric alcohol includes preferably glycols only because the effects of the present disclosure can be better exhibited. The glycols include preferably at least one of ethylene glycol and 1,2-hexanediol, more preferably 1,2-hexanediol. Moreover, the glycols may be ethylene glycol only or 1,2-hexanediol only, and may be more preferably 1,2-hexanediol only because the effects of the present disclosure can be better exhibited. The sugar alcohols include preferably mannitol, galactitol, xylitol, and sorbitol, more preferably xylitol and sorbitol, further preferably sorbitol.

As the polyhydric alcohol, those manufactured and sold by, for example, Tokyo Chemical Industry Co., Ltd., Kanto Chemical Co., Inc., FUJIFILM Wako Pure Chemical Corporation, and the like can be used. The polyhydric alcohol can be used alone or two or more thereof can be used in combination.

If the number of hydroxyl groups in one molecule of the polyhydric alcohol is 2 or more, the hydroxyl group on the surface of carbon black and the hydroxyl group of the polyhydric alcohol can interact with each other, and the effects of the present disclosure can be sufficiently exhibited. The number of the hydroxyl groups may be 3 or more or 4 or more. Moreover, an upper limit of the number of the hydroxyl groups is preferably 10 or less, more preferably 9 or less, further preferably 8 or less, from the viewpoint that the effects of the present disclosure are easy to be well exhibited.

A content of the polyhydric alcohol based on 100 parts by mass of the diene-based rubber component is preferably 0.3 parts by mass or more, more preferably 0.6 parts by mass or more, more preferably 0.8 parts by mass or more, further preferably 1.0 part by mass or more, because the "pseudo-connection of the isoprene-based rubber-polyhydric alcohol-carbon black" is easy to be effectively exhibited. Moreover, the content is preferably 6.0 parts by mass or less, more preferably 4.0 parts by mass or less, more preferably 2.0 parts by mass or less, further preferably 1.5 parts by mass or less. When the content of the polyhydric alcohol is within the above-described ranges, the effects of the present disclosure tend to be better exhibited.

<At least one selected from recycled rubber and powdered rubber>

(Recycled rubber)

In the present disclosure, the "recycled rubber" shall be those for used automobile tires, tubes, and other rubber products specified in JIS K 6313-2012, or those having equivalent properties. Besides, powdery ones are excluded. In addition, the recycled rubber is subjected to devulcanization.

As a type of the recycled rubber, any of a tube recycled rubber, a tire recycled rubber, and other recycled rubbers may be used, and a plurality of types of the recycled rubbers can be used in combination. Among them, a tire recycled rubber is preferable.

As the recycled rubber, those obtained by a known manufacturing method can be used, and for example, in addition to the most common pan method (oil method), a method with a Banbury mixer/twin-screw reaction extruder, a method by microwave, a method by ultrasonic wave, a method by electron beam irradiation, and the like have been developed, but those manufactured by any method may be used. Moreover, a commercially available recycled rubber may be used. As one of specific examples for manufacturing a recycled rubber, a method of putting a vulcanized powdered rubber into a closed mixer or an extruder and devulcanizing it at 100 to 250°C for 5 to 50 minutes while applying a mechanical shearing force is exemplified. As a commercially available product, those manufactured and sold by, for example, Muraoka Rubber Reclaiming Co., Ltd., Asahi Saiseigomu Co., Ltd., and the like can be used.

A rubber component in the recycled rubber has a natural rubber content ratio of preferably 40% by mass or more, more preferably 50% by mass or more, further preferably 70% by mass or more. When the natural rubber content ratio is within the above-described ranges, an excellent elongation at break tends to be obtained. Besides, the natural rubber content ratio of the rubber component in the recycled rubber in the present specification refers to a value calculated by pyrolysis gas chromatography (PyGC) measurement.

The recycled rubber can be used alone or two or more thereof can be used in combination.

A content of the recycled rubber when compounded based on 100 parts by mass of the diene-based rubber component is preferably 1 part by mass or more, more preferably 5 parts by mass or more, further preferably 10 parts by mass or more, from the viewpoint of concern for the environment. Moreover, the content is preferably 30 parts by mass or less, more preferably 20 parts by mass or less, further preferably 15 parts by mass or less, from the viewpoint that the effects of the present disclosure are easy to be well exhibited.

(Powdered rubber)

In the present disclosure, the "powdered rubber" is a vulcanized powdered rubber in which a waste rubber product is recycled. As a waste rubber used as a raw material for the powdered rubber, it is preferable to use a crushed tread rubber of a used rubber, spews and burrs from reaping (crushed waste tires), and the like, from the viewpoints of concern for the environment and cost. Moreover, a type of the waste rubber is not particularly limited, and examples thereof include diene-based rubbers such as a NR, SBR, BR, and IR. Besides, as the powdered rubber, a 30-mesh pass product or a 40-mesh pass product in a Tyler mesh can be utilized.

An average particle size of the powdered rubber is preferably 70 $\mu$m or more, more preferably 100 $\mu$m or more. The average particle size is preferably 1 mm or less, more preferably 750 $\mu$m or less. Besides, the average particle size of the powdered rubber in the present specification is a mass-based average particle size calculated from a particle size distribution measured in accordance with JIS Z 8815: 1994.

A rubber component in the powdered rubber has a natural rubber content ratio of preferably 40% by mass or more, more preferably 50% by mass or more, further preferably 60% by mass or more. When the natural rubber content ratio is within the above-described ranges, an excellent elongation at break tends to be obtained. Besides, the natural rubber content ratio of the rubber component in the powdered rubber in the present specification refers to a value calculated by pyrolysis gas chromatography (PyGC) measurement.

As the powdered rubber, those manufactured and sold by, for example, Muraoka Rubber Reclaiming Co., Ltd., Asahi Saiseigomu Co., Ltd., Lehigh Technologies, Inc., and the like can be used. The powdered rubber can be used alone or two or more thereof can be used in combination.

A content of the powdered rubber when compounded based on 100 parts by mass of the diene-based rubber component is preferably 1 part by mass or more, more preferably 5 parts by mass or more, further preferably 10 parts by mass or more, from the viewpoint of concern for the environment. Moreover, the content is preferably 30 parts by mass or less, more preferably 20 parts by mass or less, further preferably 15 parts by mass or less, from the viewpoint that the effects of the present disclosure are easy to be well exhibited.

(Total content of recycled rubber and powdered rubber)

A total content of the recycled rubber and the powdered rubber when at least one selected from the recycled rubber and the powdered rubber is compounded is preferably 5 parts by mass or more, more preferably 10 parts by mass or more, further preferably 15 parts by mass or more, based on 100 parts by mass of the diene-based rubber component, from the viewpoint of concern for the environment. Moreover, the content is preferably 50 parts by mass or less, more preferably 40 parts by mass or less, further preferably 30 parts by mass or less, from the viewpoint that the effects of the present disclosure are easy to be well exhibited.

<Other components>

The rubber composition of the present disclosure can appropriately comprise, in addition to the above-described components, other components commonly used for manufacturing a rubber composition, such as, for example, oil, a liquid polymer, resins other than the above-described aromatic ring-containing resins, a stearic acid, zinc oxide, an antioxidant, wax, processing aid, a vulcanizing agent, a vulcanization accelerator, and the like.

(oil)

Oil is not particularly limited, and any of those commonly used in the rubber industry can be appropriately used, such as, for example, a process oil such as paraffin-based, aromatic-based, and naphthene-based process oils. Examples of oil also include a process oil having a low content of a polycyclic aromatic (PCA) compound as an environmental measure. Examples of the low PCA content process oil include Treated Distillate Aromatic Extract (TDAE) in which an aromatic-based process oil is re-extracted, an aroma substitute oil which is a mixture of asphalt and a naphthenic oil, mild extraction solvates (MES), a heavy naphthene-based oil, and the like. Among them, an aromatic-based process oil is preferable, and TDAE oil is more preferable. As oil, those manufactured and sold by, for example, H&R Group, JXTG Nippon Oil & Energy Corporation, Idemitsu Kosan Co., Ltd., Sankyo Yuka Kogyo K.K., and the like can be used. Oil can be used alone or two or more thereof can be used in combination.
A content of oil when compounded based on 100 parts by mass of the diene-based rubber component is not particularly limited, but is more preferably 0.5 parts by mass or more, more preferably 1 part by mass or more, further preferably 3 parts by mass or more. Moreover, the content is preferably 25 parts by mass or less, more preferably 10 parts by mass or less, further preferably 7 parts by mass or less. When the content of oil is within the above-described ranges, the effects of the present disclosure tend to be better exhibited. Besides, the content of oil also includes an amount of oil used in oil extending and oil treatment.

(Liquid polymer)

The liquid polymer is not particularly limited, and examples thereof include a liquid diene-based polymer such as, for example, a liquid butadiene polymer (liquid BR), a liquid styrene-butadiene copolymer (liquid SBR), a liquid isoprene polymer (liquid IR), and a liquid styrene-isoprene copolymer (liquid SIR). As the liquid polymer, those manufactured and sold by, for example, Kuraray Co., Ltd., Nippon Soda Co., Ltd., Cray Valley, Noveon, and the like can be used. The liquid polymer can be used alone or two or more thereof can be used in combination.
A content of the liquid polymer when compounded based on 100 parts by mass of the diene-based rubber component is not particularly limited, but is more preferably 0.5 parts by mass or more, more preferably 1 part by mass or more, further preferably 3 parts by mass or more. Moreover, the content is preferably 25 parts by mass or less, more preferably 10 parts by mass or less, further preferably 7 parts by mass or less. When the content of the liquid polymer is within the above-described ranges, the effects of the present disclosure tend to be better exhibited.

(Resins other than the above-described aromatic ring-containing resins)

Examples of resins other than the above-described aromatic ring-containing resins include, for example, an aliphatic-based petroleum resin (e.g., a C5-based petroleum resin), a terpene resin, a rosin resin, and the like. They can be used alone or two or more thereof can be used in combination. A content of the resin other than the above-described aromatic ring-containing resins when compounded based on 100 parts by mass of the diene-based rubber component is the same as that of the aromatic ring-containing resin. It is preferable not to comprise any resin other than the above-described aromatic ring-containing resins from the viewpoint that effects of the present disclosure by compounding the above-described aromatic ring-containing resins are better exhibited.

(Stearic acid)

A content of the stearic acid when compounded based on 100 parts by mass of the diene-based rubber component is preferably 0.5 parts by mass or more, more preferably 1 part by mass or more, from the viewpoint of processability. Moreover, the content is preferably 10 parts by mass or less, more preferably 5 parts by mass or less, from the viewpoint of vulcanization rate.

(Zinc oxide)

A content of zinc oxide when compounded based on 100 parts by mass of the diene-based rubber component is preferably 0.5 parts by mass or more, more preferably 1 part by mass or more, from the viewpoint of processability. Moreover, the content is preferably 10 parts by mass or less, more preferably 5 parts by mass or less, from the viewpoint of abrasion resistance.

(Antioxidant)

The antioxidant is not particularly limited, and any of those commonly used in the rubber industry can be appropriately used, such as, for example, a quinoline-based antioxidant, a quinone-based antioxidant, a phenol-based antioxidant, a phenylenediamine-based antioxidant, and a carbamic acid metal salt. As the antioxidant, those manufactured and sold by, for example, Ouchi Shinko Chemical Industrial Co., Ltd., Kawaguchi Chemical Industry Co., Ltd., Sumitomo Chemical Co., Ltd., and the like can be used. The antioxidant can be used alone or two or more thereof can be used in combination.

A content of the antioxidant when compounded based on 100 parts by mass of the diene-based rubber component is preferably 0.5 parts by mass or more, more preferably 0.8 parts by mass or more, further preferably 1.0 part by mass or more. Moreover, the content is preferably 7.0 parts by mass or less, more preferably 5.0 parts by mass or less, further preferably 3.0 parts by mass or less. When the content of the antioxidant is within the above-described ranges, an anti-aging effect can be sufficiently obtained, and discoloration due to eduction of an antioxidant on a tire surface tends to be suppressed.

(Wax)

Wax is not particularly limited, and any of those commonly used in the rubber industry can be appropriately used, such as, for example, a petroleum-based wax, a mineral-based wax, and a synthetic wax. Among them, a petroleum-based wax is preferable. Examples of the petroleum-based wax include, for example, a paraffin wax, a microcrystalline wax, selected special wax thereof, and the like. As wax, those manufactured and sold by, for example, Ouchi Shinko Chemical Industrial Co., Ltd.., Nippon Seiro Co., Ltd., Paramelt B.V., and the like can be used. Wax can be used alone or two or more thereof can be used in combination.

A content of wax when compounded based on 100 parts by mass of the diene-based rubber component is preferably 0.3 parts by mass or more, more preferably 0.7 parts by mass or more, further preferably 0.8 parts by mass or more, from the viewpoint of weather resistance of a rubber. Moreover, the content is preferably 3.0 parts by mass or less, more preferably 2.5 parts by mass or less, further preferably 2.0 parts by mass or less, from the viewpoint of preventing whitening of a tire due to bloom.

(Processing aid)

Examples of processing aid include, for example, a fatty acid metal salt, a fatty acid amide, an amide ester, a silica-surface active agent, a fatty acid ester, a mixture of a fatty acid metal salt and an amide ester, a mixtures of a fatty acid metal salt and a fatty acid amide, and the like. Among them, a fatty acid metal salt is preferable. As processing aid, those manufactured by, for example, Struktol Company of America, LCC, and the like can be used. Processing aid can be used alone or two or more thereof can be used in combination.

A content of processing aid when compounded based on 100 parts by mass of the diene-based rubber component is preferably 0.5 parts by mass or more, more preferably 0.8 parts by mass or more, further preferably 1.0 part by mass or more. Moreover, the content of processing aid is preferably 10.0 parts by mass or less, more preferably 8.0 parts by mass or less, further preferably 6.0 parts by mass or less. When the content of processing aid is within the above-described ranges, the effects of the present disclosure tend to be better exhibited.

(Vulcanizing agent)

The vulcanizing agent is not particularly limited, and a known vulcanizing agent can be used, such as, for example, an organic peroxide such as dicumyl peroxide, a sulfur-based vulcanizing agent, a resin vulcanizing agent, and a metallic oxide such as magnesium oxide. Among them, a sulfur-based vulcanizing agent is preferable. As the sulfur-based vulcanizing agent, for example, sulfur, a sulfur donor such as, morpholine disulfide, and the like can be used. Among them, sulfur is preferably used. The vulcanizing agent can be used alone or two or more thereof can be used in combination.

Examples of sulfur include a powdered sulfur, a precipitated sulfur, a colloidal sulfur, a surface-treated sulfur (an oil-treated sulfur, a special sulfur treated with a dispersant, a master batch type of sulfur, etc.), an insoluble sulfur (an oil-treated insoluble sulfur, etc.), and the like, any of which can be appropriately used. As sulfur, those manufactured and sold by, for example, Tsurumi Chemical Industry Co., Ltd., Karuizawa Iou Kabushiki Kaisha, Shikoku Chemicals Corporation, Flexsys, Nippon Kanryu Industry Co., Ltd., Hosoi Chemical Industry Co., Ltd., and the like can be used.

A content of the vulcanizing agent when compounded based on 100 parts by mass of the diene-based rubber component is preferably 0.5 parts by mass or more, more preferably 0.6 parts by mass or more, more preferably 0.9 parts by mass or more. Moreover, the content is preferably 6.0 parts by mass or less, more preferably 5.0 parts by mass or less, further preferably 4.0 parts by mass or less. When the content of the vulcanizing agent is within the above-described ranges, an appropriate reinforcing effect tends to be obtained, and the effects of the present disclosure tend to be better exhibited. Besides, a content of sulfur when used as a vulcanizing agent means a content of a sulfur component itself even if the vulcanizing agent contains a component other than sulfur like an oil-treated sulfur.

(Vulcanization accelerator)

The vulcanization accelerator is not particularly limited, and a known vulcanization accelerator can be used, such as, for example, a sulfenamide-based, a thiazole-based, a thiuram-based, a thiourea-based, a guanidine-based, a dithiocarbamic acid-based, an aldehyde-amine-based or aldehyde-ammonia-based, an imidazoline-based, or a xanthate-based vulcanization accelerator. Among them, at least one of sulfenamide-based, guanidine-based, and thiuram-based vulcanization accelerators is preferable, and a sulfenamide-based vulcanization accelerator is more preferable. As the vulcanization accelerator, those manufactured and sold by, for example, Ouchi Shinko Chemical Industry Co., Ltd., Sanshin Chemical Industry Co., Ltd., and the like can be used. The vulcanization accelerator can be used alone or two or more thereof can be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N'-dicyclohexyl-2-benzothiazolylsulfenamide (DZ), and the like. Among them, N-tert-butyl-2-benzothiazolylsulfeneamide (TBBS) is preferable because the effects of the present disclosure can be better exhibited.

Examples of the thiuram-based vulcanization accelerator include, for example, tetramethylthiuram monosulfide, tetramethylthiuram disulfide, tetrabenzylthiuram disulfide (TBzTD), and the like.

Examples of the guanidine-based vulcanization accelerator include, for example, 1,3-diphenylguanidine (DPG), diorthotrilguanidine, orthotrilbiguanidine, and the like. Among them, 1,3-diphenylguanidine (DPG) is preferable because the effects of the present disclosure can be better exhibited.

A content of the vulcanization accelerator based on 100 parts by mass of the diene-based rubber component is preferably 0.5 parts by mass or more, more preferably 1.0 part by mass or more, further preferably 1.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation at break tend to be secured, and the effects of the present disclosure tend to be better exhibited.

<Rubber composition for tire tread, tire tread, and tire>

The rubber composition for tire tread of the present disclosure is used for a tire tread because it has an improved balanced performance of abrasion resistance and chipping resistance.

The rubber composition for tire tread can be manufactured by a general method. For example, it can be manufactured by a method of kneading components other than vulcanizing agents and vulcanization accelerators, of the above-described components, with a known kneader used in a general rubber industry such as a closed type kneader such as a Banbury mixer or kneader, and an open roll (a base kneading step), then adding vulcanizing agents and vulcanization accelerators followed by further kneading them (a finish kneading step), and then vulcanizing them, or the like. Besides, remilling (re-kneading step) may be performed between each step.

The tire tread and the tire can be manufactured by a usual method using the above-described rubber composition for tire tread. That is, the tire comprising the tire tread can be manufactured by extruding the rubber composition prepared by compounding the above-described components into a shape of a tire tread at an unvulcanized stage, attaching it together with other tire members on a tire forming machine, and molding them in a usual manner, thereby forming an unvulcanized tire, followed by pressurizing and vulcanizing this unvulcanized tire in a vulcanizing machine.

Kneading conditions are not particularly limited, and for example, a method of kneading at a discharge temperature of 120 to 170°C for 1 to 15 minutes in the base kneading step, kneading at a discharge temperature of 120 to 170°C for 1 to 15 minutes in the re-kneading step, and kneading at 70 to 110°C for 1 to 10 minutes in the finish kneading step is exemplified. Vulcanization conditions are not particularly limited, and for example, a method of vulcanizing at 150 to 200°C for 10 to 30 minutes is exemplified.

The tire of the present disclosure may be a pneumatic tire or a non-pneumatic tire, but is preferably a pneumatic tire. Moreover, the tire of the present disclosure can be used as various tires such as a tire for a passenger car, a heavy-duty tire for truck, bus, construction vehicle, etc., a tire for a motorcycle, a high-performance tire such as a racing tire, a winter type tire, and a run flat tire, and can be appropriately used as a tire for a passenger car and a heavy-duty tire. Among them, the tire of the present disclosure can be particularly appropriately used as a heavy-duty tire because it has an improved balanced performance of abrasion resistance and chipping resistance. The heavy-duty tire is preferably for a truck or bus.

EXAMPLE

The present disclosure will be specifically described based on Examples. The present disclosure is not limited to these Examples.

<Evaluation>

Tables 1 and 2 show results calculated based on the following evaluation methods, assuming that a rubber composition obtained by changing compounding formulations according to Tables 1 and 2 using various chemicals shown below is used for a tread of a tire (a tire (12R22.5) having a structure as shown in FIG. 1). Besides, the reference Comparative example in Table 1 shall be Comparative example 1, and the reference Comparative example in Table 2 shall be Comparative example 6.

(Various chemicals)

NR: RSS#3 (Tg: -60°C)

SBR1: SL553 (tin coupling S-SBR, vinyl content: 42%, styrene content: 10%, Tg: -64°C, available from JSR Corporation)

SBR2: JSR1502 (E-SBR, vinyl content: 18%, styrene content: 23.5%, Tg: -51°C, available from JSR Corporation)

SBR3: Nipol NS616 (S-SBR, styrene content: 21%, vinyl content: 66%, Tg: -23°C, available from ZS Elastomer Co., Ltd.)

BR: UBEPOL BR150B (high cis BR, cis content: 97%, trans content: 2%, vinyl content: 1%, Tg: -114°C, available from Ube Industries, Ltd.)

Recycled rubber: Recycled rubber with a natural rubber content of 73% by mass (available from Muraoka Rubber Reclaiming Co., Ltd.)

Powdered rubber: Powdered rubber W2-A (available from Asahi Saiseigomu Co., Ltd.)

Carbon black: N220 ($N_2SA$: 114 $m^2$/g, DBP oil absorption: 114 ml/100 g, available from Mitsubishi Chemical Corporation)

Silica: ULTRASIL VN3 ($N_2SA$: 175 $m^2$/g, available from Evonik Degussa)

Aromatic ring-containing resin 1: Nisseki Neopolymer L90 (C9-based petroleum resin polymerized with a C9 fraction (no hydroxyl group), softening point: 90-100°C, Mw: 1000, SP value: 9.10, available from JXTG Nippon Oil & Energy Corporation)

Aromatic ring-containing resin 2: YS Polystar T115 (terpene-phenol resin copolymerized with a terpene compound and phenol (having one hydroxyl group), softening point: 110 to 120°C, Mw: 500 to 1050, SP value: 8.81, available from Yasuhara Chemical Co., Ltd.)

Polyhydric alcohol 1: Ethylene glycol (carbon atoms: 2, number of hydroxyl groups: 2, $\alpha/\beta$: 1, melting point: -13°C, available from Tokyo Chemical Industry Co., Ltd.)

Polyhydric alcohol 2: 1,2-hexanediol (carbon atoms: 6, number of hydroxyl groups: 2, $\alpha/\beta$: 0.3, melting point: 45°C, available from Tokyo Chemical Industry Co., Ltd.)

Polyhydric alcohol 3: Sorbitol (carbon atoms: 6, number of hydroxyl groups: 6, $\alpha/\beta$: 1, melting point: 95°C, available from Kanto Chemical Co., Inc.)
Silane coupling agent: Si266 (sulfide-based, bis(3-triethoxysilylpropyl)disulfide, available from Evonik Degussa)
Zinc oxide: Zinc Oxide No. 2 (available from Mitsui Mining & Smelting Co., Ltd.)
Stearic acid: Bead stearic acid "Tsubaki" (available from NOF CORPORATION)
Sulfur: Powdered sulfur (comprising 5% of oil, available from Tsurumi Chemical Industry Co., Ltd.)
Vulcanization accelerator: Nocceler NS (N-tert-butyl-2-benzothiazolylsulfeneamide (TBBS), available from Ouchi Shinko Chemical Industrial Co., Ltd.)

(Test tire)

According to the compounding formulations shown in Tables 1 and 2, using a 1.7 L Banbury mixer manufactured by Kobe Steel, Ltd., all chemicals other than sulfur and vulcanization accelerators are kneaded for 5 minutes at a discharge temperature of 150°C. Next, sulfur and vulcanization accelerators are added to the obtained kneaded product, and the mixed product is kneaded with an open roll for 4 minutes until the temperature reaches 105°C to obtain an unvulcanized rubber composition.
The obtained unvulcanized rubber composition is formed into a tread shape and attached together with other tire members to prepare an unvulcanized tire, followed by press-vulcanized at 170°C for 20 minutes to obtain a test tire.

(Abrasion resistance)

With each test tire mounted on all wheels of a vehicle (truck), the vehicle is made run on an asphalt road surface of a course, and a groove depth of a tread part of the tire is measured after running of a 8000 km-distance to calculate a running distance when the groove depth is decreased by 1 mm. The results are shown by indexes according to the following equation, assuming that a running distance when the tire groove of the reference Comparative example is decreased by 1 mm is 100. The results show that the larger the index is, the better the abrasion resistance is.

$$\text{(Abrasion resistance index)} = \text{(running distance when a tire groove of each compounding is decreased by 1 mm)} / \text{(running distance when a tire groove of the reference Comparative example is decreased by 1 mm)} \times 100$$

(Chipping resistance)

With each test tire mounted on all wheels of a vehicle (truck), the vehicle is made run 10 laps on a rough road test course assuming a rocky place, and each size of all chips from a tread rubber are add up. The results are shown by indexes according to the following equation as the reference Comparative example being 100. The results show that the larger the index is, the better the chipping resistance is.

$$\text{(Chipping resistance index)} = \text{(amount of size added up of the reference Comparative example)} / \text{(amount of size added up of each compounding)} \times 100$$

(Balanced performance)

The sum of the numerical values of the abrasion resistance index and the chipping resistance index is shown as "balanced performance". The results show that the larger the numerical value of the balanced performance is, the more excellent the balanced performance of abrasion resistance and chipping resistance is.

Table 1

| | Example | | | | | | | | | | Comparative example | | | | |
|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 |
| Compounding amount (part by mass) | | | | | | | | | | | | | | | |
| NR | 80 | 50 | 50 | 50 | 50 | 30 | 20 | 50 | 50 | 50 | 80 | 80 | 80 | 80 | 50 |
| SBR1 | 5 | 30 | - | - | - | - | - | - | - | - | 5 | - | 5 | 5 | - |
| SBR2 | - | - | 30 | 30 | 30 | 50 | 60 | - | 30 | 30 | - | - | - | - | - |
| SBR3 | - | - | - | - | - | - | - | 50 | - | - | - | - | - | - | 50 |
| BR | 15 | 20 | 20 | 20 | 20 | 20 | 20 | - | 20 | 20 | 15 | 20 | 15 | 15 | - |
| Carbon black | 45 | 45 | 45 | 45 | 45 | 45 | 45 | 45 | 35 | 45 | 45 | 45 | 45 | 45 | 45 |
| Silica | - | - | - | - | - | - | - | - | 10 | - | - | - | - | - | - |
| Aromatic ring-containing resin 1 | 2.0 | 2.0 | 2.0 | 2.0 | - | - | - | - | - | 2.0 | - | 2.0 | 2.0 | - | - |
| Aromatic ring-containing resin 2 | - | - | - | - | 2.0 | 2.0 | 2.0 | 2.0 | 2.0 | - | - | - | - | - | - |
| Polyhydric alcohol 1 | 1.0 | 1.0 | 1.0 | - | - | - | - | - | - | - | - | 1.0 | - | 1.0 | - |
| Polyhydric alcohol 2 | - | - | - | 1.0 | 1.0 | 1.0 | 1.0 | 1.0 | 1.0 | - | - | - | - | - | - |
| Polyhydric alcohol 3 | - | - | - | - | - | - | - | - | - | 1.0 | - | - | - | - | - |
| Silane coupling agent | - | - | - | - | - | - | - | - | 0.8 | - | - | - | - | - | - |
| Zinc oxide | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| Stearic acid | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| Sulfur | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Vulcanization accelerator | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Average Tg (°C) of diene-based rubber component | -68 | -72 | -68 | -68 | -68 | -66 | -65 | -42 | -68 | -68 | -68 | -71 | -68 | -68 | -42 |
| Evaluation | | | | | | | | | | | | | | | |
| Abrasion resistance | 100 | 100 | 100 | 155 | 125 | 120 | 115 | 120 | 115 | 100 | 100 | 100 | 100 | 100 | 90 |
| Chipping resistance | 105 | 110 | 115 | 120 | 125 | 128 | 130 | 118 | 127 | 110 | 100 | 80 | 102 | 103 | 95 |
| Balanced performance | 205 | 210 | 215 | 235 | 250 | 248 | 245 | 238 | 242 | 210 | 200 | 180 | 202 | 203 | 185 |

Table 2

| | Example | | | | Comparative example | | | | | |
|---|---|---|---|---|---|---|---|---|---|---|
| | 11 | 12 | 13 | 14 | 6 | 7 | 8 | 9 | 10 | 11 |
| Compounding amount (part by mass) | | | | | | | | | | |
| NR | 80 | 50 | 80 | 50 | 80 | 80 | 80 | 80 | 80 | 80 |
| SBR1 | 5 | - | 5 | - | 5 | 5 | 5 | 5 | 5 | 5 |
| SBR2 | - | 30 | - | 30 | - | - | - | - | - | - |
| BR | 15 | 20 | 15 | 20 | 15 | 15 | 15 | 15 | 15 | 15 |
| Recycled rubber | 15 | 15 | - | - | 15 | 15 | 15 | - | - | - |
| Powdered rubber | - | - | 15 | 15 | - | - | - | 15 | 15 | 15 |
| Carbon black | 45 | 45 | 45 | 45 | 45 | 45 | 45 | 45 | 45 | 45 |
| Aromatic ring-containing resin 1 | 2.0 | - | 2.0 | - | - 2.0 | 2.0 | - | - | 2.0 | - |
| Aromatic ring-containing resin 2 | - | 2.0 | - | 2.0 | - | - | - | - | - | - |
| Polyhydric alcohol 1 | 1.0 | - | 1.0 | - | - | - | 1.0 | - | - | 1.0 |
| Polyhydric alcohol 2 | - | 1.0 | - | 1.0 | - | - | - | - | - | - |
| Zinc oxide | 3.0 | 3.0 | 3.0 | 3.0 | 3.0 | 3.0 | 3.0 | 3.0 | 3.0 | 3.0 |
| Stearic acid | 4.0 | 4.0 | 4.0 | 4.0 | 4.0 | 4.0 | 4.0 | 4.0 | 4.0 | 4.0 |
| Sulfur | 1.0 | 1.0 | 1.0 | 1.0 | 1.0 | 1.0 | 1.0 | 1.0 | 1.0 | 1.0 |
| Vulcanization accelerator | 1.5 | 1.5 | 1.5 | 1.5 | 1.5 | 1.5 | 1.5 | 1.5 | 1.5 | 1.5 |
| Average Tg (°C) of diene-based rubber component | -68 | -68 | -68 | -68 | -68 | -68 | -68 | -68 | -68 | -68 |
| Evaluation | | | | | | | | | | |
| Abrasion resistance | 103 | 113 | 100 | 110 | 100 | 100 | 103 | 95 | 95 | 98 |
| Chipping resistance | 104 | 110 | 101 | 107 | 100 | 103 | 101 | 95 | 98 | 96 |
| Balanced performance | 207 | 223 | 201 | 217 | 200 | 203 | 204 | 190 | 193 | 194 |

From the results described above, it can be seen that the rubber composition for tire tread of the present disclosure improves the balanced performance of abrasion resistance and chipping resistance.

EXPLANATION OF NUMERALS

10    Tire
11    Tread part
12    Sidewall part
13    Bead part
14    Bead core
15    Carcass
16    Steel belt
18    Longitudinal groove
30    Rim

It is an object of the present invention to provide a rubber composition for tire tread having an improved balanced performance of abrasion resistance and chipping resistance, a tire tread composed of the rubber composition, and a tire comprising the tire tread. The rubber composition for tire tread comprises a diene-based rubber component comprising a styrene-butadiene rubber and an isoprene-based rubber, a filler comprising carbon black, an aromatic ring-containing resin, and a polyhydric alcohol.

**Claims**

1. A rubber composition for tire tread, comprising:

   a diene-based rubber component comprising a styrene-butadiene rubber and an isoprene-based rubber,
   a filler comprising carbon black,
   an aromatic ring-containing resin, and
   a polyhydric alcohol.

2. The rubber composition for tire tread of claim 1, wherein a content of the styrene-butadiene rubber in the diene-based rubber component is 10 to 50% by mass.

3. The rubber composition for tire tread of claim 1 or 2, wherein a styrene content in the styrene-butadiene rubber is 15% or more.

4. The rubber composition for tire tread of any one of claims 1 to 3, wherein the polyhydric alcohol has 6 or more of carbon atoms.

5. The rubber composition for tire tread of any one of claims 1 to 4, wherein the aromatic ring-containing resin is a homopolymer or copolymer comprising an aromatic ring-containing monomer, the aromatic ring-containing monomer having at least one hydroxyl group.

6. The rubber composition for tire tread of any one of claims 1 to 5, further comprising at least one selected from a recycled rubber and a powdered rubber.

7. The rubber composition for tire tread of any one of claims 1 to 6, wherein the diene-based rubber component has an average glass transition temperature (Tg) of -50°C or lower.

8. The rubber composition for tire tread of any one of claims 1 to 7, wherein the polyhydric alcohol comprises a linear polyhydric alcohol.

9. The rubber composition for tire tread of any one of claims 1 to 8, wherein a content of the isoprene-based rubber in the diene-based rubber component is 30% by mass or more.

10. The rubber composition for tire tread of any one of claims 1 to 9, wherein the polyhydric alcohol satisfies the following equation (A):

    (A) $\alpha/\beta \leq 0.5$,

    $\alpha$: number of hydroxyl groups in one molecule of the polyhydric alcohol,
    $\beta$: number of carbon atoms of the polyhydric alcohol.

11. The rubber composition for tire tread of any one of claims 1 to 10, wherein a melting point of the polyhydric alcohol is lower than 50°C.

12. The rubber composition for tire tread of any one of claims 1 to 11, wherein a content of the carbon black based on 100 parts by mass of the diene-based rubber component is 40 parts by mass or more.

13. The rubber composition for tire tread of any one of claims 1 to 12, wherein a content of the carbon black in the filler is 80% by mass or more.

14. A tire tread composed of the rubber composition for tire tread of any one of claims 1 to 13.

15. A tire comprising the tire tread of claim 14.

16. The tire of claim 15, wherein the tire is a heavy-duty tire.

17. The tire of claim 16, wherein the heavy-duty tire is a heavy-duty tire for truck or bus.

**Patentansprüche**

1. Kautschukzusammensetzung für Reifenlaufflächen, umfassend:

   eine Kautschukkomponente auf Dienbasis, die einen Styrol-Butadien-Kautschuk und einen Kautschuk auf Isoprenbasis umfasst,
   einen Füllstoff, der Kohleschwarz umfasst,
   ein Harz, das einen aromatischen Ring enthält, und
   einen mehrwertigen Alkohol.

2. Kautschukzusammensetzung für Reifenlaufflächen nach Anspruch 1, wobei ein Gehalt des Styrol-Butadien-Kautschuks in der Kautschukkomponente auf Dien-Basis 10 bis 50 Masse-% beträgt.

3. Kautschukzusammensetzung für Reifenlaufflächen nach Anspruch 1 oder 2, wobei ein Styrolgehalt im Styrol-Butadien-Kautschuk 15% oder mehr beträgt.

4. Kautschukzusammensetzung für Reifenlaufflächen nach einem der Ansprüche 1 bis 3, wobei der mehrwertige Alkohol 6 oder mehr Kohlenstoffatome aufweist.

5. Kautschukzusammensetzung für Reifenlaufflächen nach einem der Ansprüche 1 bis 4, wobei das einen aromatischen Ring enthaltende Harz ein Homopolymer oder Copolymer ist, das ein einen aromatischen Ring enthaltendes Monomer umfasst, wobei das einen aromatischen Ring enthaltende Monomer mindestens eine Hydroxylgruppe aufweist.

6. Kautschukzusammensetzung für Reifenlaufflächen nach einem der Ansprüche 1 bis 5, die ferner zumindest eines aus einem recycelten Kautschuk und einem gepulverten Kautschuk umfasst.

7. Kautschukzusammensetzung für Reifenlaufflächen nach einem der Ansprüche 1 bis 6, wobei die Kautschukkomponente auf Dienbasis eine durchschnittliche Glasübergangstemperatur (Tg) von -50°C oder weniger aufweist.

8. Kautschukzusammensetzung für Reifenlaufflächen nach einem der Ansprüche 1 bis 7, wobei der mehrwertige Alkohol einen linearen mehrwertigen Alkohol umfasst.

9. Kautschukzusammensetzung für Reifenlaufflächen nach einem der Ansprüche 1 bis 8, wobei ein Gehalt des Kautschuks auf Isoprenbasis in der Kautschukkomponente auf Dienbasis 30 Masse-% oder mehr beträgt.

10. Kautschukzusammensetzung für Reifenlaufflächen nach einem der Ansprüche 1 bis 9, wobei der mehrwertige Alkohol die folgende Gleichung (A) erfüllt:

    (A) $\alpha/\beta \leq 0{,}5$,

    $\alpha$: Anzahl an Hydroxylgruppen in einem Molekül des mehrwertigen Alkohols,
    $\beta$: Anzahl an Kohlenstoffatomen des mehrwertigen Alkohols.

11. Kautschukzusammensetzung für Reifenlaufflächen nach einem der Ansprüche 1 bis 10, wobei der Schmelzpunkt des mehrwertigen Alkohols unter 50°C liegt.

12. Kautschukzusammensetzung für Reifenlaufflächen nach einem der Ansprüche 1 bis 11, wobei ein Gehalt an Kohleschwarz, bezogen auf 100 Masseteile der Kautschukkomponente auf Dienbasis, 40 Masseteile oder mehr beträgt.

13. Kautschukzusammensetzung für Reifenlaufflächen nach einem der Ansprüche 1 bis 12, wobei ein Gehalt des Kohleschwarzes in dem Füllstoff 80 Masse-% oder mehr beträgt.

14. Reifenlauffläche, die aus der Kautschukzusammensetzung für Reifenlaufflächen nach einem der Ansprüche 1 bis 13 aufgebaut ist.

15. Reifen, umfassend die Reifenlauffläche nach Anspruch 14.

**16.** Reifen nach Anspruch 15, wobei der Reifen ein Schwerlastreifen ist.

**17.** Reifen nach Anspruch 16, wobei der Schwerlastreifen ein Schwerlastreifen für Lastwagen oder Busse ist.

**Revendications**

**1.** Composition de caoutchouc pour bande de roulement, comprenant :

un composant caoutchouc à base de diène comprenant un caoutchouc de styrène-butadiène et un caoutchouc à base d'isoprène,
une charge comprenant du noir de carbone,
une résine contenant un cycle aromatique, et
un alcool polyvalent.

**2.** Composition de caoutchouc pour bande de roulement selon la revendication 1, dans laquelle la teneur en le caoutchouc de styrène-butadiène dans le composant caoutchouc à base de diène est de 10 à 50 % en masse.

**3.** Composition de caoutchouc pour bande de roulement selon la revendication 1 ou 2, dans laquelle la teneur en styrène dans le caoutchouc de styrène-butadiène est de 15 % ou plus.

**4.** Composition de caoutchouc pour bande de roulement selon l'une quelconque des revendications 1 à 3, dans laquelle l'alcool polyvalent a 6 atomes de carbone ou plus.

**5.** Composition de caoutchouc pour bande de roulement selon l'une quelconque des revendications 1 à 4, dans laquelle la résine contenant un cycle aromatique est un homopolymère ou copolymère comprenant un monomère contenant un cycle aromatique, le monomère contenant un cycle aromatique ayant au moins un groupe hydroxyle.

**6.** Composition de caoutchouc pour bande de roulement selon l'une quelconque des revendications 1 à 5, comprenant en outre au moins l'un choisi parmi un caoutchouc recyclé et un caoutchouc en poudre.

**7.** Composition de caoutchouc pour bande de roulement selon l'une quelconque des revendications 1 à 6, dans laquelle le composant caoutchouc à base de diène a une température de transition vitreuse (Tg) moyenne de -50°C ou moins.

**8.** Composition de caoutchouc pour bande de roulement selon l'une quelconque des revendications 1 à 7, dans laquelle l'alcool polyvalent comprend un alcool polyvalent linéaire.

**9.** Composition de caoutchouc pour bande de roulement selon l'une quelconque des revendications 1 à 8, dans laquelle la teneur en le caoutchouc à base d'isoprène dans le composant caoutchouc à base de diène est de 30 % en masse ou plus.

**10.** Composition de caoutchouc pour bande de roulement selon l'une quelconque des revendications 1 à 9, dans laquelle l'alcool polyvalent satisfait à l'équation (A) suivante :

(A) $\alpha/\beta \leq 0{,}5$,

$\alpha$ : nombre de groupes hydroxyle par molécule de l'alcool polyvalent,
$\beta$ : nombre d'atomes de carbone de l'alcool polyvalent.

**11.** Composition de caoutchouc pour bande de roulement selon l'une quelconque des revendications 1 à 10, dans laquelle le point de fusion de l'alcool polyvalent est inférieur à 50°C.

**12.** Composition de caoutchouc pour bande de roulement selon l'une quelconque des revendications 1 à 11, dans laquelle la teneur en le noir de carbone pour 100 parties en masse du composant caoutchouc à base de diène est de 40 parties en masse ou plus.

**13.** Composition de caoutchouc pour bande de roulement selon l'une quelconque des revendications 1 à 12, dans laquelle la teneur en le noir de carbone dans la charge est de 80 % en masse ou plus.

14. Bande de roulement composée de la composition de caoutchouc pour bande de roulement selon l'une quelconque des revendications 1 à 13.

15. Pneu comprenant la bande de roulement selon la revendication 14.

16. Pneu selon la revendication 15, lequel pneu est un pneu poids lourd.

17. Pneu selon la revendication 16, dans lequel le pneu poids lourd est un pneu poids lourd pour camion ou autocar.

# FIG. 1

**EP 3 907 255 B1**

**Patent documents cited in the description**

- JP 2009096919 A